# EUROPEAN PATENT APPLICATION

(11) **EP 3 491 926 A1**
(43) Date of publication of application: **05.06.2019**
(21) Application number: 18209330.2
(22) Date of filing: 29.11.2018
(51) Int. Cl.: A21D 15/00, A23L 3/3418, B65B 31/02, B65D 81/20, B65B 25/16

(54) **IMPROVED PROCESS FOR FOOD STORAGE**

(30) Priority: 30.11.2017 IT 201700138177
(71) Applicant: DUE BI AUTOMAZIONI DI BENETOLLO LUIGI, 30030 Vigonovo (Venezia) (IT)
(72) Inventor: BENETOLLO, Luigi, 30030 VIGONOVO (VENEZIA) (IT); BENETOLLO, Marco, 30030 VIGONOVO (VENEZIA) (IT); BENETOLLO, Elisa, 30030 VIGONOVO (VENEZIA) (IT)
(74) Representative: Piovesana, Paolo

(57) **Abstract**

Improved process for storing food (3) obtained by cooking, preferably baked food, characterized in that it comprises the sequence of the following steps:
f) making available at least one food item (3) which is at a temperature T₁ equal to or higher than about 70°C, preferably equal to or higher than about 90°C;
g) filling a container (5), which is made of a material suitable for use with food, with said food (3);
h) creating a vacuum inside a closed environment (9, 9'), in which is positioned said container (5) with said food (3), for a pre-set time and defined so as to bring said food from the initial temperature T₁ at a second temperature T₂ which is lower than T₁;
i) inject inside said container (5), which has been filled with said food (3), carbon dioxide and at least one inert gas, preferably nitrogen;
j) sealing said container (5) that has been filled with said food (3), after the previous steps of creating the vacuum and inserting carbon dioxide and at least one inert gas,
and also characterized in that said step c) of creating the vacuum and said step d) of insertion, inside the container (5) with the food (3), of carbon dioxide and at least one inert gas, are carried out so that within the container, filled with said food and sealed, there is an amount of oxygen equal to or less than about 3%, preferably equal to or less than about 2% and ideally equal to about 0.2%.

## Description

The present invention relates to an improved process for the preservation of foods obtained by cooking, in particular bakery food, and preferably foods based on dough or risen dough, such as bread, focaccia, panettone, brioche or similar.

The present invention also relates to the preserved food obtained with this process, as well as to an improved machine for implementing this process.

As is known, "fresh" bread (i.e. freshly cooked), or bakery products in general, if not properly treated by means of a preservation procedure, undergo a series of modifications that lead, in more or less rapid times, to its irreparable deterioration in quality and, above all, at the onset of mold.

At present, to preserve bakery products and to slow down their deterioration, the following procedure is mainly used. In particular, the products, after being cooked at about 100°C, are first allowed to cool at room temperature for a period of 30-90 minutes depending on their size. Appropriately, this cooling step must be carried out in a clean, sterile and above all dust-free environment.

Then, once cooled, such products are suitably frozen, at a temperature of at least -18°C (as required by the EU legislation), which is measured in the core of the products themselves, and are kept at this temperature until the time of their consumption. In essence, this requires that during the whole conservation step, as well as during the eventual transport step, the products are always kept refrigerated/frozen, with the consequent need to have available environments suitable to maintain the cold chain, with particularly high energy costs for the realization of such conditions.

Therefore, this process of conservation is not completely satisfactory as it provides for a series of complicated and expensive operations due to the required environments and equipment.

Furthermore, before the consumption of the products thus conserved, a defrosting and/or heating step of the products themselves is necessary, thus lengthening the preparation time for their consumption.

Last but not least, the fact that, once defrosted, the products thus conserved can no longer be refrozen and this is not convenient, particularly in the context of large retailers, where the products are defrosted on the basis of consumer requests, that are however difficult to predict.

Also known are the so-called "bake-off" processes in which the finished product is not refrigerated/frozen, but rather its dough or semi-finished semi-cooked product whose leavening and/or final cooking is carried out at the time or in correspondence of its consumption. However, this procedure is not completely satisfactory since, by requiring the consumer to carry out the final steps envisaged for the preparation of the product to be consumed, it is inevitably also required that the same user has the means and time to perform these final steps at his disposal.

Furthermore, in regard to the heat treatment of freezing in general, it has been noted that the finished products, when heated or cooked at the moment of their use or consumption, have different organoleptic characteristics from those of the "fresh" product which is consumed immediately after cooking (i.e. without having been subjected to any preservation procedure). Consequently, the products thus conserved are not particularly appreciated by consumers.

Currently, for the preservation of bread or bakery products in general, chemical treatments are also used which require the use of appropriate mixtures of preservatives that are generally added to the mixture. However, these chemical treatments require the use of substances that on one hand can always represent a damage to health and on the other certainly do not find appreciation from the consumer who may be reluctant to buy and consume foods containing chemical preservatives.

NL8105828 describes a process for increasing the shelf life of partially baked bread. In particular, before the end of cooking, the bread is extracted from the cooking oven and, while it is still hot, is placed in a container; subsequently, a particularly high vacuum is first created in the container (i.e. until a residual pressure of less than 0.05 bar is reached) for a period of about 5-6 seconds in order to cool the bread and then, before sealing the container with the bread inside, a mixture of gas, including CO₂ and N₂, is injected inside the latter.

EP1279600 describes a process for increasing the shelf life of partially baked bread. In particular, before the end of cooking, the bread is extracted from the cooking oven and, while it is still hot, is placed in a container; subsequently, a partial vacuum is first created in the container itself and then, before sealing the container with the bread inside it, a mixture of gas, including CO₂ and N₂, is injected therein.

GB2005980 describes a product based on bread and a process for its production. In particular, before the end of cooking, the bread is extracted from the cooking oven and, while still hot, is placed in a container under conditions of partial vacuum; subsequently, before sealing the container with the bread inside, an inert gas (i.e. only N₂) is injected into the container.

The object of the invention is to propose an improved process for preserving a food obtained by cooking, preferably by baking it, which overcomes the aforementioned drawbacks present in traditional processes.

Another object of the invention is to propose a process which is simple, rapid and economical to implement.

Another object of the invention is to propose a process which allows to significantly reduce the energy consumption required for storing the food.

Another object of the invention is to propose a process which allows to obtain a preserved food which guarantees the preservation of the organoleptic and/or nutritional characteristics of the original food, i.e. before its preservation.

Another object of the invention is to propose a process which allows to reduce the cooking time of the food, thus allowing further energy saving.

Another object of the invention is to propose a process which allows to obtain a stored food which is ready for use and which, in particular, does not require substantially any further preparation step at the time of its consumption.

Another object of the invention is to propose a process which allows to obtain a preserved food which is hygienic and safe at the sanitary level.

Another object of the invention is to propose a process for preserving a food, obtained by cooking, which does not use or requires chemical preservatives.

Another object of the invention is to propose a process which allows a long shelf life of the food.

Another object of the invention is to propose a process that allows to preserve a food obtained by cooking, preferably based on bread, for a period of at least 60 days, preferably up to 90 days.

Another object of the invention is to propose a process for storing food which can be stored for a long time without the need for refrigeration systems.

Another object of the invention is to propose a process that can be implemented and applied both on an artisanal and industrial level.

Another object of the invention is to propose a process which has an alternative and/or improved characterization with respect to the traditional ones.

Another object of the invention is to propose a process whose steps can be implemented sequentially, simply and inexpensively, from a single machine and/or within a single environment.

All these objects, either individually or in any combination thereof, and others which will result from the following description, are achieved, according to the invention, by a process with the features indicated in claim 1 and with a machine with the characteristics indicated in claim 14.

The present invention is hereinafter further clarified in some of its preferred embodiments, which are described hereinafter as a non-limiting example with reference to the attached tables of drawings, in which:
Figure shows a side view of a machine according to the invention which is configured to implement the process according to the invention,
Figure 2 shows it in the other view in a first condition (with the lid on a first work plane),
Figure 3 shows the same view of fig. 2 in a second condition (with the lid above the other work plane),
Figure 4 shows an enlarged detail of fig. 2 with the container inside which the food to be stored is inserted

Preliminarily, it should be noted that "food obtained by cooking" is generally understood to mean any substance, consisting either of a single component or of a plurality of components, which, to be eaten, should, or preferably have to be cooked in advance, preferably baked in an oven, at a temperature equal to or greater than 70°C, preferably equal to or greater than 90°C, and more preferably at about 95°-100°C.

The process according to the invention for storing a food obtained by cooking, preferably of a backed food, comprises the sequence of the following steps:
a) providing a still hot food, that is at a temperature T₁ higher than about 70°C;
b) filling a container, which is made of material suitable for food use, with said food which is at said temperature T₁;
c) creating a vacuum inside a closed environment in which said container filled with said food is positioned for a pre-set time defined so as to bring the food from the initial temperature T₁ to a second temperature T₂ which is lower than T₁;
d) inject inside said container, which has been filled with said food, carbon dioxide (CO₂) and at least one inert gas, preferably nitrogen (N₂);
e) sealing said container, filled with said food, after the previous step of vacuum creation and insertion of carbon dioxide and at least one inert gas.

The step c) of creating the vacuum and the step d) of insertion inside the container of carbon dioxide (CO₂) and at least one inert gas, preferably nitrogen (N₂), are carried out so that inside the container, filled with said food and sealed, there is an amount of oxygen equal to or less than about 3%, preferably equal to or less than about 2% and ideally equal to or less than about 0.2%.

Advantageously, step c) of vacuum creation and step d) of insertion inside the container of carbon dioxide (CO₂) and at least one inert gas, preferably nitrogen (N₂), lasts for a pre-set time which is defined as the amount of time needed to reach an amount of oxygen inside the container, filled with said food and sealed, which is equal to or less than about 3%, preferably equal to or less than about 2% and ideally equal to or less than about 0.2%.

Appropriately, the fact that the steps c) of creation of the vacuum and e) of insertion inside the container of carbon dioxide (CO₂) and at least one inert gas, preferably nitrogen (N₂), are carried out so as to reach, inside of the closed environment in which said container is placed, an amount of oxygen which is equal to or less than 3%, preferably equal to or less than 2% and ideally equal to or less than about 0.2%, is advantageous as it allows to slow down the formation of molds, or in any case the oxidation and/or the degradation of the organoleptic qualities of the food. In particular, the amount of oxygen can also be defined as partial pressure of oxygen (i.e. the oxygen pressure with respect to the total pressure of the gas mixture contained in the container), which must also be equal to or less than 3%, preferably equal to or less than 2% and ideally equal to or less than about 0.2%.

In particular, the step a) of making food available, for example bread, provides for taking the food out of the cooking oven.

Conveniently, in step a) of making food available, the latter reach and/or are at the temperature T₁ after and/or by means of their cooking.

In particular, the food at the temperature T₁ is made available by taking it at the end, at or shortly before the end, of its cooking.

Conveniently, the process according to the invention can also provide to start from a raw food (that is, uncooked and before any cooking thereof) or partially cooked. Advantageously, for this purpose, the process according to the invention also comprises a preliminary step in which said uncooked or partially cooked food is inserted and/or transported inside a cooking system, for a suitable time depending on each food and from its size, so as to cook it and/or bring it to a temperature of at least 70°C, preferably at least 90°C. Preferably, the cooking plant comprises a traditional professional type oven and/or also an industrial oven, both of the tunnel and spiral type.

Preferably, in the case of bread, the latter is made available when its core temperature T₁, measured in a traditional manner at its heart, is about 95-100°C, preferably about 96-98°C.

Preferably, in the case of bread, the latter is made available as soon as its internal temperature T₁, measured in a traditional manner at its core, has reached about 95-100°C, preferably about 96-98°C.

Preferably, the bread is taken before the end of its complete cooking time, preferably it is taken from its corresponding cooking oven after a time interval corresponding to about 85-95% of its traditional complete cooking time. Appropriately, this allows to reduce cooking times, thus allowing an energy saving during the cooking step of about 15-18% compared to that required in the traditional complete bread baking cycle.

Advantageously, the step b) of filling the envelopes comprises the transfer, preferably by conventional automatic means or even manually, of the food - which exits, for example from the cooking station, at a temperature T₁ - to a dosing and packaging station to carry out the corresponding operations. In particular, this station is configured to dose the quantity of food in such a way as to use containers of suitable dimensions for packaging the food itself. It is understood that the container used in step b) is selected so that the food is completely and suitably contained inside the container.

Advantageously, as said, the containers used are bags made of deformable and flexible material so as to allow their expansion/compression. More in detail, the envelopes are designed to expand/compress, without causing irreversible deformation, breakage or damage to the walls of the envelope.

Alternatively, the containers can be made of substantially rigid or in any case slightly deformable material.

Advantageously, the used containers are at least partially, preferably entirely, made of transparent material.

Preferably, the used containers comprise exclusively layers of polymeric material. In particular, the used containers comprise at least one layer, preferably two or more, of plastic film for food use, such as, for example, polyethylene, polyvinylchloride, polyolefins, polypropylene, polyamide, polyester and their combinations suitable for food use.

Conveniently, the outer or intermediate layer of the container is made of a material, for example polyester, configured to make the container itself resistant to punctures and high temperatures, or of oriented polyamide or polyester, which instead constitute a barrier to atmospheric agents. Conveniently, the inner layer of the container is made of a material, for example polyethylene or polypropylene, which is suitable for direct contact with foodstuff, as well as being suitable for conferring to the container itself characteristics of flexibility and resistance to heat.

Preferably, in one of its preferred embodiments, the container comprises an outer layer of polyamide (PA) and an inner layer of polyethylene (PE).

Preferably, the container can comprise a layer, preferably the intermediate layer, which is treated with a metallic paint or which comprises a metal film so as to define a protection barrier from ultraviolet rays.

Advantageously, the aforesaid layers are coupled together, for example, by conventional adhesives such as laminated adhesives, among which the two-component polyurethane-based products are preferred.

Conveniently, step c) provides for the creation of the vacuum inside a closed environment in which said container is placed, filled with the food which is at a temperature substantially similar to T₁, i.e. equal to or greater than about 70°C, preferably equal to or greater than about 95°C.

Preferably, step c) of vacuum creation lasts for a pre-set time and is defined so as to lower the temperature of the food contained in the container and to take it from the initial temperature T₁ to a temperature T₂ of about 30-40°C, preferably of about 35-37°C.

Advantageously, the overall duration of steps c), d) and e) is about 30-90 seconds.

Preferably, the creation of the vacuum during step c) is carried out so as to reach within the container (or inside the chamber in which said container is positioned with the food) a pressure value of about 0.3 - 0.9 bar, preferably about 0.9 bar, below atmospheric pressure. In other words, the creation of the vacuum is carried out in such a way that the residual pressure inside the container (or inside the chamber in which said container is positioned with the food) is about 0.1 - 0.7 bar, and preferably about 0.1 bar.

Preferably, step c) of vacuum creation is performed by positioning the container, which has been filled with the food but which is still open, in a machine 2 according to the invention and described in more detail below. Advantageously, it is understood that the dosing and packaging operation (i.e. insertion of the food inside the container) can be carried out on the work plane 6 or 6' of the machine 2.

Advantageously, step c) of vacuum creation can be carried out by positioning the container, which has been filled with the food but which is still open, inside a traditional vacuum-creating apparatus. Advantageously, the vacuum apparatus can be of the traditional type, such as for example those sold by Orved Spa. Preferably, once the dosage and packaging station have carried out the corresponding operations, the containers can be transferred automatically or manually to the interior of the vacuum apparatus.

In particular, once the containers filled with the food have automatically entered or have been manually positioned inside the machine 2 or the vacuum apparatus, the vacuum creation step starts, which in more detail includes the following steps:
- closing the lid on the work plane or the vacuum bell in order to create an environment closed, sealed and completely insulated from the outside; is
- opening of the vacuum solenoid valve (and activation of the vacuum pump) for the creation of the vacuum inside said room for a predefined time (i.e. setting the time interval necessary for carrying out and maintaining the vacuum).

Advantageously, the step of creating the vacuum can also be controlled on the basis of the vacuum level to be reached and, for example, for this purpose, inside the chamber there is a pressure switch which stops the process once the vacuum level has been obtained desired.

Advantageously, step c) can also be carried out in a traditional autoclave for the treatment of food products in which the pressure inside it is suitably controlled.

Conveniently, in another embodiment of the process according to the invention, first a vacuum is created inside a closed environment in which only the food which has been previously taken is placed and which is at the temperature T₁ and, only subsequently, within the same environment and/or maintaining appropriate conditions of environmental sterility, a container is filled, made of material suitable for food use, with said food which, following the previous step of vacuum creation, has cooled by passing from the temperature T₁ to the temperature T₂.

Conveniently, the duration of step c) of vacuum creation depends on the internal temperature of the food and, preferably, can be controlled by a timer and/or based on the amount of oxygen which is detected by means of conventional sensors.

Conveniently, step c) of vacuum creation is carried out by a pumping apparatus comprising a vacuum pump. Appropriately, the vacuum pump is a rotary pump of dry type or oil type or, preferably, of liquid ring type.

Conveniently, the duration of step c) of vacuum creation can be set by acting on the dimensioning of the pumping apparatus, and/or by checking the operating parameters of said apparatus, such as for example the pumping speed of the vacuum pump.

Preferably, the pump can have a pumping speed of about 110 m³/h.

Advantageously, moreover, the duration of the step c) of creating the vacuum can be regulated by acting on the pumping speed of the vacuum pump and, appropriately, the increasing the pumping speed of the pump can shorten the duration of step c). Preferably, the pumping speed of the pump is controlled by an inverter and, in this way, the duration and therefore the speed of vacuum creation are adjusted.

Advantageously, moreover, the duration of the step c) of creating the vacuum is regulated according to the type of food to be stored and, opportunely, for this purpose there is a corresponding action on the pumping speed of the vacuum pump used for the creation of the vacuum during this step. In particular, an excessive speed of vacuum creation, given by a too high value of the pumping speed of the pump, can indeed lead to a too rapid removal of the water vapor from the food, and therefore to the formation of surface defects, such as breaking of the crust in case of bread with hard and/or poorly gas-permeable crusts, or in an incomplete water vapor discharge, which therefore could be completed in an undesirable manner once the container with the food is sealed.

Suitably, the residual pressure to be obtained following to the creation of the vacuum may vary according to the temperature, the specific weight of the food and the volume of the container. Preferably, however, inside the closed chamber in which the container is placed with the food, the pressure drop with respect to atmospheric pressure is between 0.3 bar and 0.9 bar and, preferably, is equal to 0, 9 bar. In other words, the desired residual pressure inside the container is 0.1 - 0.7 bar, and preferably is about 0.1 bar. In any case, adjustments of the residual pressure to be obtained following to the creation of the vacuum on the basis of the aforementioned specific weight and volume parameters are within the knowledge of the technician who will set the vacuum apparatus in an appropriate manner.

Advantageously, the vacuum creation step causes the residual humidity of the food to be removed and thus allows cooking of the food itself to be completed, which was taken from the cooking oven before said cooking was completed and, in particular, was been taken once the temperature of about 70°C, preferably equal to or greater than about 95°C, was reached. Conveniently, this allows the consolidation of the organoleptic properties of the bread and the evaporation of its residual moisture, to guarantee a better crunchiness of the bread itself.

Advantageously, during and/or at the end of the vacuum creation step c), a mixture of carbon dioxide and at least one inert gas, preferably nitrogen, is introduced into the container filled with the food. Conveniently, the introduction of said mixture is carried out by means of conventional valves and nozzles conveniently provided in the machine 2 and/or in the vacuum apparatus, so as to fill the container with said mixture.

Preferably, step d) of injecting the mixture of carbon dioxide and inert gas into the container is carried out, again automatically, by the same machine 2 or by the same apparatus in which the vacuum creation step c) is carried out.

Preferably, the gas mixture which is introduced during step d) comprises about 30-70%, preferably 50%, of carbon dioxide, and about 30-70%, preferably 50%, of an inert gas, preferably of nitrogen.

The use of CO₂ in the mixture is particularly advantageous since, being a gas with reducing properties, it allows to prevent the oxidation that can be caused by the oxygen or the residual water vapor present in the food, and also inhibits the formation of organisms that need oxygen to thrive, such as molds.

Expediently, step d) of introduction of the mixture of carbon dioxide and inert gas (nitrogen) is carried out - within the environment in which the vacuum has been created - substantially in the vacuum condition (and therefore at the corresponding pressure values) reached at the end of said step c) of creation of the vacuum.

Preferably during the step d) of placing the mixture of carbon dioxide and inert gas (nitrogen) inside the container the pumping apparatus - which created the vacuum during the step c) - is turned off, thus leaving the closed environment, inside which is placed the container with the food, in a static vacuum condition, i.e. in a condition in which the pressure is and is kept lower than atmospheric pressure; in particular, this condition is maintained because said environment is insulated and sealed from the outside.

Advantageously, moreover, step d) of introduction of the mixture of carbon dioxide and inert gas (nitrogen) has a duration such as to introduce inside the container with the food a quantity of said mixture which is sufficient to avoid the crushing of said food and, at the same time, does not cause excessive swelling, permanent deformation or explosion of the container.

Advantageously, the step e) of sealing the container filled with the food can be carried out by means of an ultrasound system and/or bars provided with resistors which overheat, causing the sheet of plastic to melt at the level of its opening.

Preferably, the sealing step e) of the container is carried out, always automatically, by the machine 2 and/or by the same apparatus in which the vacuum creation step c) is carried out.

Conveniently, the containers, filled with food and thus sealed, are automatically or manually taken from the machine 2 and/or from the vacuum apparatus for quality control and/or to be labelled, collected and/or packaged.

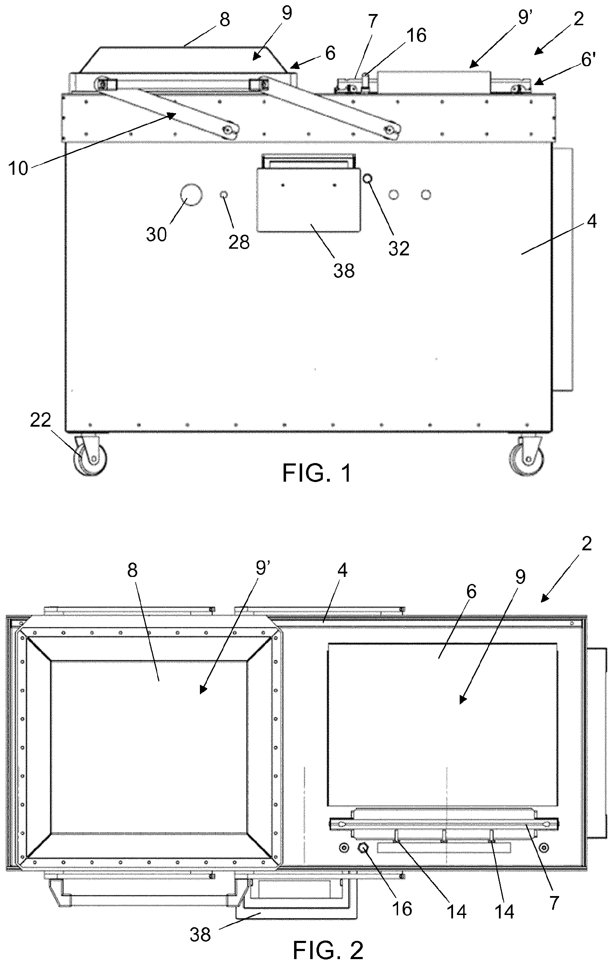

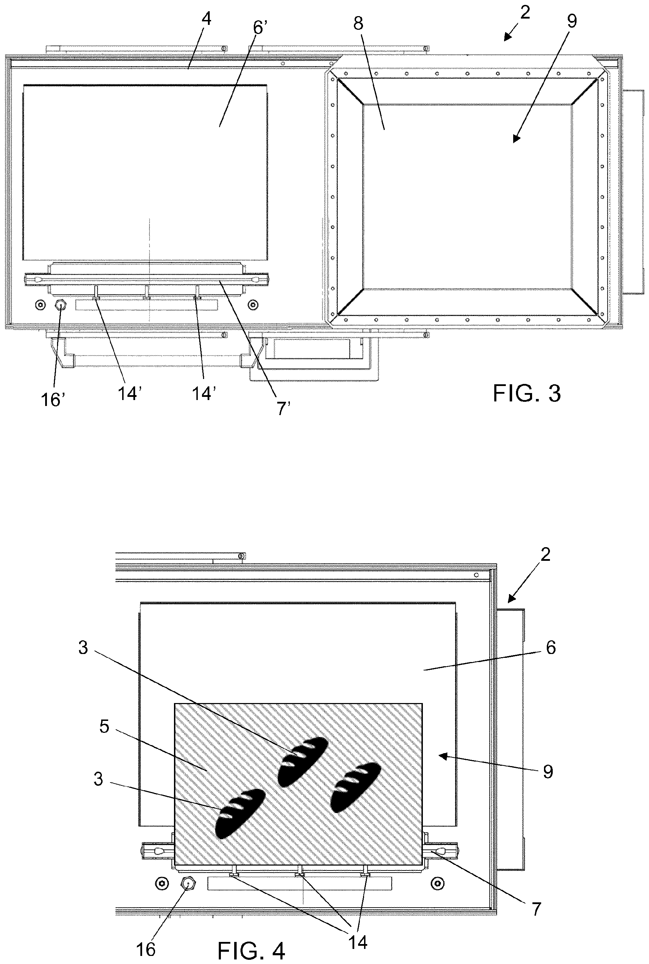

As said, the process according to the invention can be advantageously implemented with a dedicated machine 2, which can preferably be configured as described below and shown in Figures 1-4.

In particular, the machine 2 according to the invention comprises an outer support frame 4 which, preferably, is also configured to house the pumping apparatus inside it. Advantageously, the frame 4 is provided with means, for example wheels 22, for its movement within an environment or between different environments.

Advantageously, the machine 2 comprises at least one, and preferably two work planes 6, 6' so as to allow two parallel preservation processes to be carried out on corresponding foodstuffs, thus optimizing the productivity of the machine.

Conveniently, each of the two work planes 6, 6' comprises a welding system 7 configured to seal the container 5 containing the food product 3.

Conveniently, the work planes 6, 6' are alternately covered by a lid 8 mounted on handling means 10, for example of oscillating arms configured to allow the lid to move between the two work stations defined by the work planes 6 and 6'. Advantageously, the lid 8 and the outer support frame 4 are both made of metallic material, preferably made of stainless steel.

In particular, the food to be packaged, already inserted in a container 5, is positioned on one of the two work planes 6 or 6' which is then closed at the top by the lid 8 so as to define a closed environment, respectively 9 and 9', in which vacuum can be created.

In correspondence of each work plane 6 and 6' there are provided respective nozzles 14 and 14' for injecting the gas into the environment 9, 9' and, therefore, inside the container 5 with the food 3. In particular, the nozzles 14 and 14' are connected by means of suitable conduits to a container containing the mixture of carbon dioxide and inert gas to be injected.

Moreover, a corresponding suction mouth 16 and 16' is provided at each work plane 6 and 6', which are connected by means of suitable conduits to the same pumping apparatus (not shown) for creating the vacuum in the respective closed environments 9, 9' which are defined by alternately closing the lid 8 respectively on the working plane 6 or 6'. Conveniently, the pumping apparatus is housed inside the support frame 4 below the work planes 6, 6'.

Conveniently, the pumping apparatus comprises at least one vacuum pump which, preferably, is a liquid ring vacuum pump.

Appropriately, the use of a liquid ring vacuum pump, which in particular uses water as an operating liquid, is advantageous and preferred over oil pumps or dry pumps as it allows moisture removal more effectively. In fact, when food is still hot, the latter emit large quantities of water vapor, which during the suction step, could condense on the pump walls and this, in the case of pumps that use oil as lubricant, can cause the formation of water/oil emulsions that ruin the pump itself. Moreover, in the case of dry pumps, the presence of considerable quantities of vapor which can condense, renders the action of the pump itself ineffective.

The machine 2 comprises a control unit (processor) for controlling the activation/deactivation of the vacuum pump, of the nozzle 14 and of the welding system 7. Conveniently, the control unit is configured to manage - preferably automatically - the individual operations envisaged in the process according to the invention, as well as their sequence.

Advantageously, the handling means 10 of the lid 8 and/or the lid itself are provided with means (for example a sensor connected to a limit stop system) for detecting the condition in which the lid 8 hermetically closes the environment 9, 9', in order to send a corresponding signal to the control unit.

Preferably, the lid 8 terminates at its lower edge with a gasket (not shown), preferably a lip seal, configured to permit an airtight seal of the environments 9, 9' in which the vacuum is created.

Conveniently, the pumping apparatus comprises one or more valves configured for alternately connecting the vacuum pump with the suction mouth 16' of the work plane 6' or with the suction mouth 16 of the work planes 6.

Moreover, advantageously, the machine 2 comprises at least a traditional type of a vacuum gauge 28 to indicate the pressure inside the environment 9 or 9'.

Moreover, advantageously, the machine 2 includes emergency switches, for example a button 30, for immediate shutdown of the machine in the event of an emergency.

Advantageously, the machine 2 comprises a visual and/or acoustic indicator (for example a buzzer 32) to alert the operator that the packaging process is terminated.

Advantageously, the machine 2 also comprises a user interface 36 provided with a display and with input means (preferably of the touch-screen type). Advantageously, the user interface 36 is protected inside a drawer 38 provided on the frame 4 in order to prevent an accidental modification of the working parameters.

The operation of the machine 2 is clear from what has been described and, in particular, comprises the following operations.

First the operator positions the container 5 with inside the food 3 to be stored on one of the two planes 6 or 6' so that the nozzles 14 are facing and preferably inserted inside said container; suitably, the container 5 is positioned so that its open edge is in correspondence of the welding system 7.

Subsequently, then, the operator closes the lid 8 above the work plane 6 in which the container 5 has been positioned with the food 3 so as to define a corresponding closed and sealed environment 9.

At this point, therefore, the operator can start the following work cycle:
- the control unit controls the activation of the vacuum pump of the pumping unit and the connection of the suction mouth 16 with the environment 9 (inside which the container 5 with the food 3 has been positioned) in a manner to create a vacuum inside said environment and the aforesaid container;
- after a pre-set time interval - which is appropriately predefined so as to cool the food and thus bring it from the temperature T₁ to a lower temperature T₂ - the control unit interrupts the connection between the suction mouth 16 of the environment 9 and the vacuum pump, and initiates the introduction of the mixture of carbon dioxide and inert gas (nitrogen) through the nozzles 14,
- after a further pre-set time interval - which is appropriately predefined so that the creation of the vacuum and the introduction of said mixture create an atmosphere inside the container with the food, comprising an amount of oxygen equal to or less than 3%, and preferably equal to or less than 2%, and ideally equal to or less than about 0.2% - the control unit interrupts the injection of said mixture and activates the welding system 7 so as to seal, at its edge open, the container 5 with inside the food.

In particular, during the introduction of said mixture the vacuum pump is deactivated and, within the environment 9, is maintained - thanks to the fact that said environment is closed, sealed and insulated from the outside - the vacuum condition reached during the vacuum creation step.

Conveniently, after a further period of time necessary to cool the welded container portion and to fill the vacuum created in the environment 9, the control unit activates the visual and/or sound indicator (for example the buzzer 32) to warn the operator at the end of the work cycle.

Appropriately, the start of the aforesaid work cycle is automatically controlled by closing the lid 8 above the respective work plane 6 or 6'.

Appropriately, the duration of the aforesaid work cycle, including also the step of removal of the vacuum to allow the opening of the lid 8, is substantially about 30 sec - 90 sec.

Therefore, the operator conveniently raises the lid 8 and repositions it on the other work plane 6' where - preferably while the aforementioned work cycle which led to the packaging of the food positioned on the first work plane 6 was being carried out - had previously placed a second container containing a second food to be packaged. At this point it can therefore promptly start a new work cycle for the packaging of said second food.

Conveniently, in the process according to the invention, it is understood that within the same container one or more foods can be inserted and packaged.

From what has been said, it is clear that the process and the machine according to the invention is particularly advantageous compared to the traditional ones because:
- allows to store at room temperature a food obtained by cooking, and in any case already completely and entirely cooked, for a period of time of at least 60 days, preferably even up to 90 days, from its production (cooking),
- does not require refrigeration environments and systems, thus allowing a considerable saving both of costs and energy in the storage step, as well as simplifying the possible transport step,
- once the container has been opened, the food is ready for consumption; if necessary, the container containing the food inside and suitably drilled by the consumer can be inserted in the microwave oven for rapid heating of the food itself,
- the food in the containers is substantially free of bacterial load harmful to humans or in any case has a bacterial load so low that it can be considered as easily consumable according to all food regulations;
- the food thus preserved has both the appearance and the flavour typical of the freshly cooked food,
- is simple, economical and does not require the use of treatment chemicals for storage,
- the use of a container like the one described further allows to process the food in a very versatile and safe way thanks to the particularly hygienic, robust and malleable structure; moreover, in the case of a deformable bag container, thanks to its own structure, once emptied, it allows an easy disposal avoiding problems related to the dimensions or to compacting operations typical of rigid or semi-rigid enclosures of common use,
- its steps can be implemented sequentially in a completely automated way within a single machine or in any case within the same environment.

In particular, it is noted that none of the prior documents NL8105828, EP1279600 and GB2005980 envisages creating a vacuum for a pre-set and defined time so that the food to be packaged cools and passes from an initial temperature T₁ (equal to or greater than about 70°C, preferably equal to or higher than about 90°C) at a temperature T₂ (lower than T₁ and about 30-40°C, preferably about 35-37°C) and, at the same time, does not provide that the creation of the vacuum and the introduction of the mixture of carbon dioxide and inert gas are carried out so that inside the container is created an atmosphere with an amount of oxygen equal to or less than 3%, preferably equal to or less than 2% and ideally equal to or less than about 0.2%.

In particular, NL8105828 does not teach that the step of creating the vacuum and the introduction of the mixture of carbon dioxide and inert gas is carried out so that inside the container an atmosphere is created with an amount of oxygen equal to or less than 3%, preferably equal to or less than 2% and ideally equal to or less than about 0.2%. Furthermore, EP1279600 and GB2005980 do not teach to create the vacuum so that the food to be packaged cools and passes from an initial temperature T₁ (equal to or higher than about 70°C, preferably equal to or higher than about 90°C) to a temperature T₂ (lower than T₁ and about 30-40°C, preferably about 35-37°C). Moreover, unlike the present invention, GB2005980 does not provide to insert, inside the container with the food, a mixture of gas containing, in addition to the nitrogen, also carbon dioxide.

As said, the process of the invention is particularly suitable for preserving bread or similar foods, such as focaccia, panettone, or brioche, which are based on dough or a leavened dough that is baked in the oven, however it is understood that it can be applied for the preservation of other types of food which are obtained by cooking, preferably in the oven, and which, during this cooking (even partial or in any case almost complete), reach a temperature of at least 70°C, preferably at least 90°C.

A further object of the invention is the packaged food, i.e. the container filled with the food, which is obtained by the process described above.

A further object of the invention is the machine which automatically and sequentially implements the steps of the described process.

## Claims

1. Improved process for storing food (3) obtained by cooking, preferably baked food, **characterized in that** it comprises the sequence of the following steps:
a) making available at least one food item (3) which is at a temperature T₁ equal to or higher than about 70°C, preferably equal to or higher than about 90°C;
b) filling a container (5), which is made of a material suitable for use with food, with said food (3);
c) creating a vacuum inside a closed environment (9, 9'), in which is positioned said container (5) with said food (3), for a pre-set time and defined so as to bring said food from the initial temperature T₁ at a second temperature T₂ which is lower than T₁;
d) inject inside said container (5), which has been filled with said food (3), carbon dioxide and at least one inert gas, preferably nitrogen;
e) sealing said container (5) that has been filled with said food (3), after the previous steps of creating the vacuum and inserting carbon dioxide and at least one inert gas,
and also **characterized in that** said step c) of creating the vacuum and said step d) of insertion, inside the container (5) with the food (3), of carbon dioxide and at least one inert gas, are carried out so that within the container, filled with said food and sealed, there is an amount of oxygen equal to or less than about 3%, preferably equal to or less than about 2% and ideally equal to about 0.2%.

2. Process according to claim 1, **characterized in that** the step c) of creation of the vacuum and the step d) of insertion inside the container of carbon dioxide (CO₂) and at least one inert gas, preferably nitrogen (N₂), last for a pre-set time which is defined so as to reach an amount of oxygen inside the container, filled with said food and sealed, which is equal to or less than about 3%, preferably equal to or less than about 2% and ideally equal about 0.2%.

3. Process according to one or more of the preceding claims, **characterized in that** said step d) of introduction of the mixture of carbon dioxide and inert gas is carried out, within the environment (9, 9') in which the vacuum has been created, substantially with the same vacuum condition that has been reached at the end of said step c) of vacuum creation.

4. Process according to one or more of the previous claims, **characterized in that**:
- first said container is filled with said food which is at said temperature T₁, and
- then a vacuum is created inside said closed environment (9, 9'), which is sealed and insulated from the outside, in which is placed said container (5) which has been filled with said food (3), for a pre-set and defined time so as to cool said food and thus bring it from temperature T₁ to a temperature T₂ which is lower than T₁, said temperature T₂ being about 30-40°C, preferably about 35-37°C.

5. Process according to one or more of the preceding claims, **characterized in that**, during said step of making available at least one food item (3), this is at said temperature T₁ following to its at least partial cooking.

6. Process according to one or more of the preceding claims, **characterized in that** said at least one food (3), preferably bread, is provided when its core temperature T₁ is about 95-100°C.

7. Process according to one or more of the preceding claims, **characterized in that** the overall duration of said steps c), d) and e) is about 30-90 seconds.

8. Process according to one or more of the preceding claims, **characterized in that** said step of creating the vacuum is carried out so as to reach, within said closed environment (9, 9') and/or of said container (5), a residual pressure of about 0.1 - 0.7 bar, and preferably of about 0.1 bar.

9. Process according to one or more of the preceding claims, **characterized in that** the duration of the vacuum creation step c) is regulated by acting on the pumping speed of a vacuum pump of a pumping apparatus configured to create the vacuum inside of said closed environment (9, 9') in which is positioned said container (5) which has been filled with said food (3).

10. Process according to one or more of the previous claims, **characterized in that** inside said container (5), which has been filled with said food, is inserted a mixture of gas which comprises:
- about 30-70%, preferably about 50%, of carbon dioxide, e
- about 30-70%, preferably about 50%, of an inert gas, preferably of nitrogen.

11. Process according to one or more of the preceding claims, **characterized in that** said at least one food (3) obtained by cooking comprises foods based on dough or a leavened dough which is baked in the oven, such as bread or the like.

12. Process according to one or more of the previous claims, **characterized in that** the step d) of introducing the mixture of carbon dioxide and inert gas, preferably nitrogen, has a pre-set duration which is defined so as to introduce into the container (5) with the food (3) a quantity of said mixture which is sufficient to prevent the crushing of said food and, at the same time, does not cause excessive swelling, permanent deformation or an explosion of the container itself.

13. Process according to one or more of the preceding claims, **characterized in that** said step c) of creating the vacuum, said step d) of insertion into said container of carbon dioxide and at least one inert gas, and said sealing step e) are implemented automatically within the same vacuum apparatus (2).

14. Machine (2) for implementing a process according to one or more of the preceding claims, **characterized in that** it comprises:
- a support frame (4) inside which is housed a pumping apparatus provided with a vacuum pump,
- at least one work plane (6) defined on said support frame (4) and designed to be closed at the top by means of a removable lid (8) so as to create a closed (sealed) environment insulated from the outside, said at least one work plane (6) being provided with:
- a suction mouth (16) connected in a controlled way with said vacuum pump so as to create vacuum in said environment (9),
- at least one nozzle (14) for introducing a mixture of carbon dioxide and inert gas into a container (5) with the food intended to be placed on said work plane (6), and
- a welding system (7) for sealing said container (5),
said machine (2) also comprising a control unit for managing said machine and for controlling the activation/deactivation of said vacuum pump, of said at least one nozzle (14) and of said welding system (7).

15. Machine (2) according to the previous claim, **characterized in that** it comprises at least two adjacent work planes (6, 6') defined on said support frame (4), said removable lid (8) is configured to be moved alternately between a first work plane (6) and a second work plane (6') so as to create respectively a first environment (9), which is closed, sealed and insulated from the outside, and a second environment (9'), which is also closed, sealed and insulated from the outside.
